# EUROPÄISCHE PATENTANMELDUNG

(11) **EP 1 595 456 A2**
(43) Veröffentlichungstag der Anmeldung: **16.11.2005**
(21) Anmeldenummer: 05405275.8
(22) Anmeldetag: 30.03.2005
(51) Int. Cl.: A22C 7/00

(54) **Form-Fleischpresse und Verfahren zum Fleischpressen**

(30) Priorität: 13.05.2004 CH 8472004
(71) Anmelder: Hoegger AG, 9230 Flawil (CH)
(72) Erfinder: Hoegger, Cornel, 9230 Flawil (CH)
(74) Vertreter: Frei Patent Attorneys

(57) **Zusammenfassung**

Die Form-Fleischpresse (2) zur Herstellung von gepressten Objekten umfasst mindestens einen Pressstempel (1) in einer Pressrichtung mit mindestens einer Pressfläche zur Begrenzung einer Presskammer (7). Die Fleischpresse umfasst weiter ein Trennteil (1a), welches Trennteil in die Presskammer (7) hineinragt derart, dass die Presskammer (7) dadurch zumindest beim Pressen und zumindest teilweise unterteilt wird. Das Trennteil (1a) ist in der Presskammer (7) verschiebbar angeordnet. Vorzugsweise sind mehrere Pressstempel zum Pressen in verschiedenen Richtungen vorhanden, und die Trennteile sind bevorzugt an einem Pressstempel bezüglich der Pressfläche vorstehend ausgestaltet.

## Beschreibung

Die Erfindung betrifft eine Form-Fleischpresse gemäss dem Oberbegriff von Anspruch 1. Die Erfindung betrifft weiter ein Verfahren zum Fleischpressen gemäss dem Oberbegriff von Anspruch 11.

Bei der Herstellung von Fleischwaren ist es bekannt, ein Fleischstück einer Form-Fleischpresse zuzuführen, um aus dem Fleischstück, welches ursprünglich eine natürlich vorgegebene Form aufweist, ein geformtes Fleischstück mit vorgebbarem Querschnitt und/oder vorgebbarer Oberflächenbeschaffenheit zu bilden. Derartige Form-Fleischpressen arbeiten mit relativ grossen Presskräften von beispielsweise bis zu 40 Tonnen, was die Geschwindigkeit des Pressvorganges limitiert. Das zu formende Fleischstück ist zudem ein Naturprodukt und daher nur innerhalb der durch seine innere Struktur gegebenen Grenzen in einem Arbeitsprozess verformbar, wobei auch der Geschwindigkeit des ablaufenden Verformungsprozesses Grenzen gesetzt sind. Ein Nachteil bekannter Form-Fleischpressen ist daher die Tatsache, dass das Formpressen des Fleischstücks relativ lange dauert, beziehungsweise dass der Produktions-Ausstoss oder die Kadenz relativ gering ist. Diese geringe Kadenz ist insbesondere dann von Nachteil, wenn der Form-Fleischpresse eine leistungsfähige Vorrichtung wie ein Slicer nachgeordnet ist. Der Slicer schneidet das geformte Fleischstück in Scheiben, wobei dieser, bedingt durch die langsame Form-Fleischpresse, nicht mit maximal möglicher Geschwindigkeit betrieben werden kann. Es besteht daher ein Bedarf nach sehr leistungsfähigen Form-Fleischpressen.

Es ist Aufgabe der vorliegenden Erfindung eine Form-Fleischpresse sowie ein Verfahren zum Fleischpressen zu schaffen, welche einen erhöhten Ausstoss an gepressten Objekten, insbesondere an gepressten Fleischstücken aufweist.

Diese Aufgabe wird gelöst mit einer Form-Fleischpresse aufweisend die Merkmale von Anspruch 1. Die Unteransprüche 2 bis 10 betreffen weitere, vorteilhaft ausgestaltete Form-Fleischpressen. Die Aufgabe wird weiter gelöst mit einem Verfahren zum Fleischpressen aufweisend die Merkmale von Anspruch 11.

Die erfindungsgemässe Form-Fleischpresse dient insbesondere zum Formpressen von unterschiedlich grossen, in der Regel unförmigen, Fleischstücken in gepresste Fleischstücke mit einheitlichem Querschnitt und mit gleicher Oberfläche. Die gepressten Fleischstücke werden üblicherweise in einem dem Formpressen nachfolgenden Arbeitsgang mit Hilfe eines Slicers in Scheiben geschnitten, um dadurch einzelne Fleischstücke, wie z.B. Steaks oder einzelne Stapel wie z.B. Aufschnittware, mit einheitlichem Querschnitt und gleichem Gewicht zu bilden. Das Formpressen erfolgt vorzugsweise in allen drei Dimensionen, d.h. bezüglich Breite, Höhe und Länge des zu pressenden Objektes.

Die Aufgabe der vorliegenden Erfindung wird mit einer Form-Fleischpresse gelöst, welche mindestens einen Pressstempel in einer ersten Pressrichtung, mit mindestens einer Pressfläche zur Begrenzung einer Presskammer umfasst, und welche mindestens ein Trennteil umfasst, welches zumindest beim Pressen in die Presskammer hineinragt, derart dass die Presskammer dadurch beim Pressen mindestens teilweise unterteilt wird. Das mindestens eine Trennteil ist dabei in der Presskammer verschiebbar angeordnet, auch bei geschlossener Presskammer.

Dank der Ausgestaltung der Form-Fleischpresse mit einem oder mehreren Trennteilen können in einem einzigen Pressvorgang und in einer einzelnen Presskammer zwei oder noch mehr zu pressende Objekte gleichzeitig zu einem gepressten Objekt verformt werden, wobei die einzelnen zu pressenden Objekte während dem Pressvorgang durch das mindestens eine Trennteil gegenseitig sauber voneinander getrennt sind. Die Stirnseiten der derart gepressten Objekte sind daher sauber ausgebildet.

Ohne Verwendung eines Trennteils während dem Formpressen würden die Stirnseiten der gepressten Fleischstücke einen sich gegenseitig berührenden oder sich gegenseitig überlappenden Abschnitt ausbilden. Dieser Abschnitt könnte nicht als hochwertiges Produkt verwertet werden und müsste daher als Restfleisch mit geringer Qualität weiter verarbeitet werden. Die erfindungsgemässe Form-Fleischpresse gewährleistet somit sowohl eine hohe Kadenz als auch eine hohe Qualität der gepressten Objekte.

Die erfindungsgemässe Form-Fleischpresse kann auch mehrere Trennteile aufweisen, welche in der Presskammer eine Mehrzahl von zu pressende Objekte gegenseitig abgrenzen. Die erfindungsgemässe Form-Fleischpresse weist daher den Vorteil auf, dass in einem einzigen Pressvorgang eine Mehrzahl von zu pressenden Objekten, d.h. eine Mehrzahl von Fleischstücken, gleichzeitig gepresst werden können, was die Kadenz der Anzahl pro Zeiteinheit gepresster Fleischstücke erhöht. In einer bevorzugten Ausgestaltung werden gleichzeitig zwei Fleischstücke gepresst.

Das Trennteil ist bevorzugt derart ausgestaltet, dass dieses die geschlossene Presskammer in zwei voneinander getrennte Teilräume unterteilt. Das Trennteil kann jedoch auch derart ausgestaltet sein, dass die Teilräume nur teilweise voneinander getrennt sind, so dass nach dem Pressen benachbart angeordnete, gepresste Objekte sich an deren Stirnseite zumindest teilweise berühren. Ein Trennteil kann an einem Pressstempel vorstehend ausgebildet sein, aber auch an jeder anderen Begrenzungsfläche der Presskammer, oder als separates Teil, solange das Trennteil bezüglich bzw. in der Presskammer verschiebbar angeordnet ist.

Die Aufgabe wird weiter gelöst mit einem Verfahren zum Fleischpressen mit einer Form-Fleischpresse, wobei zumindest zwei zu pressende Objekte einer geöffneten Presskammer zugeführt werden, und wobei zwischen den zu pressenden Objekten ein Trennteil angeordnet wird, welches während dem Fleischpressen in der geschlossenen Presskammer verschoben wird, und wobei das Trennteil nach dem Fleischpressen vorzugsweise selbsttätig wieder in eine Grundstellung gebracht wird.

Nach erfolgtem Pressen wird die Presskammer geöffnet, die gepressten Objekte aus der Presskammer entfernt, und das Trennteil in eine definierte Ausgangslage verschoben, so dass die Presskammer zur Aufnahme von neuen, zu pressenden Objekten bereit ist. Dies ermöglicht den Pressvorgang vollständig automatisiert zu betreiben. Die zu pressenden Objekte können der Presskammer zeitlich nacheinander oder gleichzeitig zugeführt werden. Bevorzugt wird die Presskammer mit einer Zuführvorrichtung derart automatisch beschickt, dass der Presskammer im wesentlichen gleichzeitig mehrere, vorzugsweise zwei, zu pressende Objekte zugeführt werden.

Wird ein Pressstempel verwendet, an dessen Pressfläche ein Trennteil vorstehend ausgebildet ist, ergibt sich der weitere Vorteil, dass bestehende Form-Fleischpressen mit einem solchen Pressstempel nachgerüstet werden können. Somit kann bei bestehenden Form-Fleischpressen der Produktionsausstoss beziehungsweise die Kadenz mit nur geringen Zusatzkosten verdoppelt, bei mehreren Trennteilen sogar noch weiter erhöht, werden. Bei einer Form-Fleischpresse mit einem solchen Presstempel ist es beispielsweise auch möglich die dem Pressstempel bzw. Trennteil gegenüberliegende Kammerwand mit einer Aussparung zu versehen, in welche das Trennteil beim Pressen eingeschoben werden kann. Dadurch entsteht in der Pressrichtung des Presstempels keine Begrenzung des Pressvorschubs aufgrund eines Anstossens des Trennteils an einer gegenüberliegenden Kammerwand.

Die erfindungsgemässe Form-Fleischpresse sowie das erfindungsgemässe Verfahren zum Fleischpressen wird nachfolgend anhand eines Ausführungsbeispiels mit den folgenden Figuren im Detail beschrieben. Es zeigen:
- Figur 1: eine schematische Längsansicht der Form-Fleischpresse mit geöffneter Presskammer;
- Figur 2: eine schematische Seitenansicht der geöffneten Form-Fleischpresse gemäss Figur 1;
- Figur 3: eine schematische Längsansicht der Form-Fleischpresse mit geschlossener Presskammer, nach erfolgtem Pressvorgang;
- Figur 4: eine schematische Seitenansicht der geschlossenen Form-Fleischpresse gemäss Figur 3;
- Figur 5: eine Draufsicht der in den Figuren 1 und 2 dargestellten Form-Fleischpresse;
- Figur 6: schematisch eine Längsansicht einer ersten Pressvorrichtung;
- Figur 7: schematisch eine Seitenansicht der in Figur 6 dargestellten ersten Pressvorrichtung;
- Figur 8a: schematisch eine Längsansicht des ersten Pressstempels in einer ersten Stellung;
- Figur 8b: schematisch eine Längsansicht des ersten Pressstempels in einer zweiten Stellung;
- Figur 9: schematisch eine Seitenansicht des in den Figuren 8a und 8b dargestellten Pressstempels.

In den Figuren sind dieselben Gegenstände mit denselben Bezugszeichen versehen.

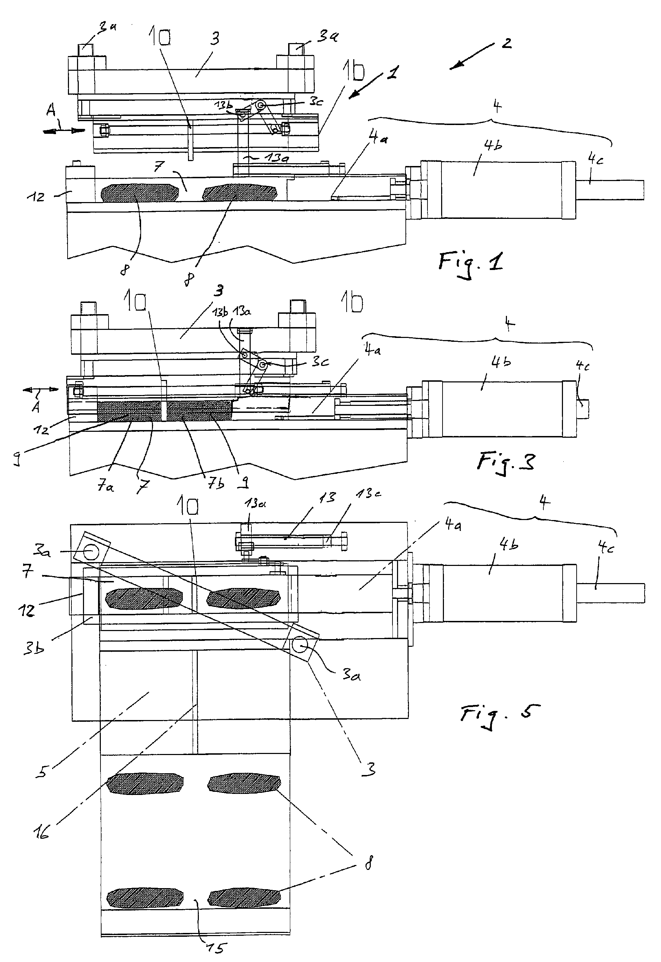

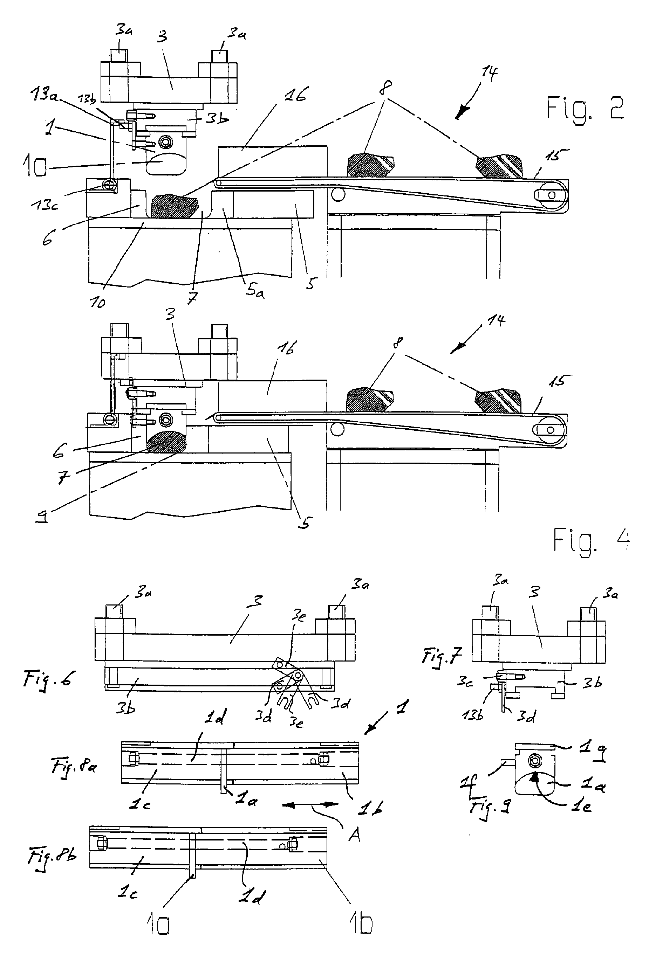

Figur 1 zeigt schematisch eine Längsansicht und Figur 2 schematisch eine Seitenansicht einer Form-Fleischpresse 2 in geöffneter Arbeitsstellung. Die Form-Fleischpresse 2 umfasst eine erste Pressvorrichtung 3, welche einen ersten Pressstempel 1 in vertikaler Richtung bewegt, sowie eine zweite Pressvorrichtung 4, welche einen zweiten Pressstempel 4a in einer ersten horizontalen Richtung A bewegt, sowie eine dritte Pressvorrichtung 5, welche einen dritten Pressstempel 5a in einer zweiten horizontalen Richtung B bewegt. Die drei Pressstempel 1, 4a und 5a begrenzen, zusammen mit der feststehenden Wand 6, der Grundplatte 10 sowie der verschliessbaren Seitenöffnung 12, die Presskammer 7. Die Presskammer ist als länglicher Hohlraum ausgestaltet, wobei der erste Pressstempel 1 in der Bewegungsrichtung A verschiebbar gelagert ist, welche in Längsrichtung des Hohlraumes verläuft.

Die erste Pressvorrichtung 3 umfasst zwei vertikal verlaufende Führungen 3a. Die erste Pressvorrichtung 3 umfasst zudem, wie in den Figuren 6 und 7 im Detail dargestellt, eine Schlittenführung 3b, in welcher der in den Figuren 8a, 8b und 9 im Detail dargestellte erste Pressstempel 1 über das Schlittenführungsteil 1g verschiebbar gelagert ist. Wie in der Seitenansicht in Figur 9 dargestellt weist der erste Pressstempel 1 eine Pressfläche 1e auf, welche zur Presskammer 7 hin ausgerichtet ist, und welche zur Begrenzung der Presskammer 7 dient. Ein Trennteil 1a ist mit dem Pressstempel 1 fest verbunden und ist bezüglich der Pressfläche 1e vorstehend angeordnet. Wie in Figur 1 dargestellt ist der Pressstempel 1 an der ersten Pressvorrichtung 3 in Bewegungsrichtung A verschiebbar gelagert. In der geöffneten Presskammer 7 sind zwei zu pressende Objekte 8 beziehungsweise zwei Fleischstücke angeordnet, welche in Bewegungsrichtung A gegenseitig beabstandet sind.

Figur 2 zeigt zudem eine Seitenansicht einer Beschickungsvorrichtung 14, welche ein Förderband 15 aufweist, auf welchem die ungepressten Objekte 8 der geöffneten Presskammer 7 zugeführt werden. Die Beschickungsvorrichtung 14 umfasst einen Handschutz 16, welcher auch zur Positionierung der ungepressten Objekte 8 auf dem Förderband 15 dient, so dass jedes ungepresste Objekt 8 in Richtung A positioniert ist, und kein ungepresstes Objekt 8 unter das Trennteil 1a zu liegen kommt. Aus der in Figur 5 dargestellten Draufsicht der Form-Fleischpresse 2 gemäss den Figuren 1 und 2 sind die auf dem Förderband 15 angeordneten, ungepressten Objekte 8 ersichtlich. In der dargestellten Anordnung werden die ungepressten Objekte 8 parallel zugeführt, so dass beide Objekte 8 gleichzeitig oder im wesentlichen gleichzeitig in die geöffnete Presskammer 7 gelangen. Die Objekte 8 könnten der geöffneten Presskammer 7 jedoch auch zeitlich nacheinander zugeführt werden.

Die Figuren 3 und 4 zeigen den Zustand der Form-Fleischpresse 2 nach dem der Pressvorgang abgeschlossen ist. Der Pressvorgang umfasst im wesentlichen zwei Verfahrensschritte. In einem ersten Verfahrensschritt wird zum Pressen, wie in den Figuren 3 und 4 dargestellt, die erste Pressvorrichtung 3 abgesenkt, sowie die dritte Pressvorrichtung 5 derart in Bewegungsrichtung B zum Objekt 8 hin verschoben, dass die geschlossene Presskammer 7 ausgebildet wird. Damit ist der in Figur 4 dargestellte Innenquerschnitt der Presskammer 7 festgelegt. Das Trennteil 1a ist dabei, wie in Figur 1 dargestellt, derart bezüglich der beiden sich in der Presskammer 7 befindlichen Objekte 8 angeordnet, dass das Trennteil 1a während dem Absenken der ersten Pressvorrichtung 3 zwischen die Objekte 8 zu liegen kommt. In einem zweiten, nachfolgenden Verfahrensschritt wird die zweite Pressvorrichtung 4 mit Antrieb 4b und Stange 4c betätigt und der zweite Pressstempel 4a in Bewegungsrichtung A zu den Objekten 8 hin verschoben. Dabei erfolgt die Einwirkung der seitlichen Presskraft vorerst über das in der Figur rechts angeordnete Objekt 8 und danach, über das Trennteil 1a, auch auf das in der Figur links angeordnete Objekt 8. Dabei werden aus den ungepressten Objekten 8, wie in Figur 3 dargestellt, die gepressten Objekte 9 erzeugt. Während dem zweiten Verfahrensschritt bleibt der Innenquerschnitt der geschlossenen Presskammer 7 konstant, so dass das Volumen der geschlossenen Presskammer 7 nur in Verschiebungsrichtung A verkleinert wird, und die Objekte 8 in die in Figur 3 dargestellte Form der gepressten Objekte 9 verformt werden. Während dem zweiten Verfahrensschritt wird das sich zwischen den Objekten 8 befindliche Trennteil 1a und der damit fest verbundene erste Pressstempel 1 in Verschiebungsrichtung A nach links verschoben. Wie aus der Figur 3 ersichtlich, ist der erste Pressstempel 1 nach Abschluss des Pressvorganges, im Vergleich zu der in Figur 1 dargestellten Stellung, nach links verschoben.

Nach Abschluss der Formpressung werden die beiden Pressstempel 1 und 5a wieder in die in den Figuren 1 und 2 dargestellte Ausgangslage zurückgeführt, die Seitenöffnung 12 geöffnet, und die beiden gepressten Objekte 9 mit Hilfe des zweiten Pressstempels 4a über die Seitenöffnung 12 aus der Presskammer 7 gefördert. Danach wird die Seitenöffnung 12 wieder geschlossen und der zweite Pressstempel 4a in die in Figur 1 dargestellte Ausgangsstellung zurückgeführt.

Der erste Pressstempel 1 wird selbsttätig von der in Figur 3 dargestellten Lage in die in Figur 1 dargestellte Ausgangslage zurückgeführt. Zur Erfüllung dieser Funktion weist der erste Pressstempel 1 sowie die erste Pressvorrichtung 3 die nachfolgend beschriebene Anordnung auf. Wie in Figur 9 dargestellt weist der erste Pressstempel 1 eine vorstehende Welle 1f auf. Wie in den Figuren 6 und 7 dargestellt umfasst die erste Pressvorrichtung 3 einen an einer vorstehenden Welle 3c angeordneten Rückstellhebel, welcher in einer ersten Position 3d und in einer zweiten Position 3e dargestellt ist. Der Rückstellhebel umfasst zudem ein vorstehendes Rückstellteil 3f. Die Form-Fleischpresse 2 umfasst eine Rückstellvorrichtung 13 mit einem Anschlagteil 13a. Der Rückstellhebel ist an der vorstehenden Welle 3c der Pressvorrichtung 3 schwenkbar gelagert und greift in die vorstehende Welle 1f des ersten Pressstempels 1 ein. Wird der Pressstempel 1 von der in Figur 3 dargestellten Lage in vertikaler Richtung in die in Figur 1 dargestellte Lage bewegt, so schlägt das Rückstellteil 3f an das Anschlagteil 13a an, wodurch, wie in Figur 1 dargestellt, der Pressstempel 1 in Bewegungsrichtung A nach rechts in eine Grundstellung verschoben wird. Diese Anordnung hat zur Folge, dass der sich gemäss Figur 3 in der zweiten Position 3e befindliche Rückstellhebel während der Aufwärtsbewegung der ersten Pressvorrichtung 3 in die erste Position 3d überführt wird. Dadurch wird der erste Pressstempel 1 in die in Figur 1 dargestellte Grundstellung verschoben.

Somit wird der erste Pressstempel 1 und dadurch auch das Trennteil 1a während der Aufwärtsbewegung der ersten Pressvorrichtung 3 selbsttätig in die in Figur 1 dargestellte Grundstellung gebracht. Figur 8a zeigt den ersten Pressstempel 1 in dieser Grundstellung, bezüglich der in Figur 6 dargestellten ersten Pressvorrichtung 3. Figur 8b zeigt den ersten Pressstempel 1, bezüglich der in Figur 6 dargestellten ersten Pressvorrichtung 3, in der in Bewegungsrichtung A verschobenen Stellung, wie diese nach dem Abschluss des Pressvorganges eingenommen wird.

Aus Figur 8a oder 8b ist ersichtlich, dass der erste Pressstempel 1 aus einer ersten und einer zweiten Formhälfte 1b, 1c gebildet ist, welche über eine Gewindestange 1d mit Muttern zusammengehalten sind. Das Trennteil 1a ist mit der zweiten Formhälfte 1c fest verbunden. Die beiden Formhälften 1b, 1c bestehen aus Kunststoff. Die beiden Formhälften 1b, 1c können mit einer Vielzahl unterschiedlich verlaufender Innenflächen 1e, der Pressfläche, ausgestaltet sein. Die Innenfläche 1e könnte beispielsweise als ebene Fläche, kreisförmig oder eckig verlaufend ausgestaltet sein. Der Verlauf der Innenfläche 1e bestimmt den Querschnitt der geschlossenen Presskammer 7 und dadurch auch die Querschnittform des gepressten Objektes 9.

Nachdem die gepressten Objekte 9 aus der Form-Fleischpresse 2 entfernt sind werden mit Hilfe des Förderbandes 15 zwei weitere zu pressende Objekte 8, bzw. zwei weitere Fleischstücke der geöffneten Presskammer 7 zugeführt und danach der Pressvorgang ausgeführt. Die Form-Fleischpresse weist eine Mehrzahl von Aktuoren auf, um die vorgängig beschriebenen Bewegungen auszuführen. Vorzugsweise werden alle Aktuoren mit Hilfe einer programmierbaren Maschinensteuerung angesteuert, so dass der gesamte Pressvorgang inklusive die Zuführung und die Abführung der Objekte 8, 9 automatisch abläuft. Dabei ist nur noch darauf zu achten, dass genügend zu pressende Objekte 8 zur Verfügung stehen, und dass die gepressten Objekte 9 richtig abtransportiert werden.

Im dargestellten Ausführungsbeispiel ist das Trennteil 1a derart bezüglich der geschlossenen Presskammer 7 angepasst ausgestaltet, dass die geschlossene Presskammer 7 in zwei getrennte Teilkammern 7a, 7b unterteilt wird. Das Trennteil 1a könnte beispielsweise auch im dritten Pressstempel 5a vorstehend angeordnet sein, wobei der dritte Pressstempel 5a dann bezüglich der Pressvorrichtung 5 in Bewegungsrichtung A verschiebbar gelagert ist. Ein derart angeordnetes Trennteil wäre ebenfalls geeignet, um die geschlossene Presskammer 7 in getrennte Teilkammern 7a, 7b zu unterteilen, wobei das Trennteil in Richtung A verschiebbar gelagert ist.

Die in den Figuren beschriebene Form-Fleischpresse dient der zweite Pressstempel 4a auch als Ausstosskolben für gepresste Objekte 9. In einer einfacheren Ausführungsform der erfindungsgemässen Form-Fleischpresse ist ein Presstempel lediglich als Ausstosskolben gestaltet.

## Patentansprüche

1. Form-Fleischpresse (2) zur Herstellung von gepressten Objekten (9), umfassend mindestens einen Pressstempel (1, 4a, 5a) in einer Pressrichtung (3, 4, 5), mit mindestens einer Pressfläche (1e) zur Begrenzung einer Presskammer (7), weiter umfassend mindestens ein Trennteil (1a), welches Trennteil (1a) zumindest beim Pressen in die Presskammer (7) hineinragt derart, dass die Presskammer (7) **dadurch** beim Pressen zumindest teilweise unterteilt wird, wobei das mindestens eine Trennteil (1a) in der Presskammer (7) verschiebbar angeordnet ist.

2. Form-Fleischpresse (2) nach Anspruch 1, **dadurch gekennzeichnet, dass** mehrere Pressstempel (1, 4a, 5a) zum Pressen in verschiedenen Richtungen angeordnet sind, dass die Presskammer (7) in einer oder mehreren Pressrichtungen einen oder mehrere Trennteile (1a) umfasst, welche/s Trennteil/e die Presskammer beim Pressen in mehrere separate Teilkammern (7a,7b) unterteilt/en und beim Pressen verschiebbar ist/sind.

3. Form-Fleischpresse (2) nach Anspruch 1 oder 2, **dadurch gekennzeichnet, dass** die Presskammer (7) als länglicher Hohlraum ausgestaltet ist, und mindestens ein Pressstempel (1, 4a, 5a) in einer Bewegungsrichtung (A, B) verschiebbar gelagert ist, welche in Längsrichtung oder Querrichtung des Hohlraumes verläuft.

4. Form-Fleischpresse (2) nach einem der vorhergehenden Ansprüche, **dadurch gekennzeichnet, dass** eine Rückstellvorrichtung (13) eine Wirkverbindung zum mindestens einen Pressstempel (1, 4a, 5a) aufweist, um diesen bei geöffneter Presskammer (7) in eine Grundstellung zu bewegen.

5. Form-Fleischpresse (2) nach einem der vorhergehenden Ansprüche, **dadurch gekennzeichnet, dass** der mindestens eine Pressstempel (1, 4a, 5a) ein einziges Trennteil (1a) umfasst, welches bezüglich der Pressfläche vorstehend ausgestaltet ist.

6. Form-Fleischpresse (2) nach einem der vorhergehenden Ansprüche, **dadurch gekennzeichnet, dass** der mindestens eine Pressstempel (1, 4a, 5a) an der Pressvorrichtung (3, 4, 5) verschiebbar gelagert ist.

7. Form-Fleischpresse (2) nach Anspruch 6, **dadurch gekennzeichnet, dass** der mindestens eine Pressstempel (1, 4a, 5a) einen Schlitten (1g) umfasst, welcher in einer Führung (3b) der Pressvorrichtung (3) verschiebbar gelagert ist.

8. Form-Fleischpresse (2) nach einem der vorhergehenden Ansprüche, **dadurch gekennzeichnet, dass** der mindestens eine Pressstempel (1, 4a, 5a) ein austauschbares Formteil (1b, 1c) umfasst, welches die Pressfläche (1e) bildet, wobei die Pressfläche (1e) insbesondere gekrümmt, eckig oder flach ausgestaltet ist.

9. Form-Fleischpresse (2) nach Anspruch 8, **dadurch gekennzeichnet, dass** der Pressstempel (1,4a,5a) aus zwei Formteilen (1b, 1c) besteht, welche lösbar miteinander verbunden sind.

10. Form-Fleischpresse (2) nach einem der vorhergehenden Ansprüche, **dadurch gekennzeichnet, dass** eine Beschickungsvorrichtung (14) derart ausgestaltet und angeordnet ist, dass zumindest zwei zu pressende Objekte (8) gleichzeitig oder kurzzeitig aufeinanderfolgend der geöffneten Presskammer (7) zuführbar sind.

11. Verfahren zum Fleischpressen mit einer Form-Fleischpresse (2), wobei mindestens zwei zu pressende Objekte (8) einer geöffneten Presskammer (7) zugeführt werden, wobei zwischen den zu pressenden Objekten (8) ein Trennteil (1a) angeordnet wird, welches während dem Fleischpressen in der geschlossenen Presskammer (7) verschoben wird.

12. Verfahren nach Anspruch 11, **dadurch gekennzeichnet, dass** das Trennteil (1a) nach dem Fleischpressen selbsttätig wieder in eine Grundstellung gebracht wird.
